# EUROPEAN PATENT SPECIFICATION

(11) **EP 0 480 481 B1**
(45) Date of publication and mention of the grant of the patent: **18.09.1996**
(21) Application number: 91121621.6
(22) Date of filing: 10.04.1987
(51) Int. Cl.: G11B 15/68

(54) **Cassette or cartridge auto-changers**
Automatischer Kassettenwechsler
Changeur automatique de cassettes

(30) Priority: 12.04.1986 JP 84674/86
(43) Date of publication of application: 15.04.1992
(62) Divisional of application: 87303169.4
(73) Proprietor: SONY CORPORATION, Tokyo 141 (JP)
(72) Inventor: Nonaka, Wataru, c/o Patents Division, Shinagawa-ku Tokyo 141 (JP); Hirata, Eiichi, c/o Patents Division, Shinagawa-ku Tokyo 141 (JP)
(74) Representative: Purvis, William Michael Cameron

(56) References cited:
- WO-A-87/06215
- US-A- 3 690 479

## Description

This invention relates to cassette or cartridge auto-changers, and more particularly, but not exclusively, to video cassette auto-changers.

A video cassette auto-changer has been provided, for example, for use by broadcasting stations, so that a large number of video tape cassettes can be automatically selectively loaded in sequence into a plurality of video tape recorders (VTRs) so as to permit continuous video reproducing and/or recording for an extended time. In a known video cassette auto-changer, a large number of cassette storage bins are arrayed vertically and horizontally in an arrangement of stacks thereof, with a plurality of VTRs disposed at one end of the stack arrangement, and with a cassette transporting device for selectively transporting cassettes between the storage bins and the VTRs. Having in mind the relatively large dimensions of the stack arrangement in orthogonally related directions, for example, in vertical and horizontal directions, the cassette transporting device may comprise a carriage arranged to receive a cassette from, and to discharge a cassette into a selected one of the storage bins or VTRs with which the carriage is registered, a movable guide rail extending in one of the orthogonally related directions, for example, vertically and having a length at least as large as the height of the stack arrangement, with the carriage being mounted for vertical movements along the movable guide rail, and fixed guide rails extending in the other orthogonally related direction, that is, horizontally at the top and bottom of the stack arrangement along the length thereof, with sliders being movable along the fixed guide rails and attached to the ends of the movable guide rail. By effecting movements of the sliders along the fixed guide rails and of the carriage along the movable guide rail, the carriage can be brought into selective registry with the various cassette storage bins or VTRs. However, by reason of the relatively large space occupied by the stack arrangement, it is at least difficult and costly, and in some instances even impossible, to achieve precise parallel alignment of the upper and lower fixed guide rails, with the result that the sliders, when rigidly connected to the ends of the movable guide rail for movably mounting the sliders on the fixed guide rails, may jam relative to the latter.

Moreover, in the above-described video cassette auto-changer, it is necessary to transmit electrical control signals over large distances, for example, to the carriage as it is moved over relatively large vertical and horizontal distances for selectively registering with any one of the large number of cassette storage bins or the plurality of VTRs. For this purpose, it has been proposed to employ an elastically coiled electrical cord for transmitting the electrical control or driving signals to the movable carriage, with the intention that the cord will be automatically extended and contracted in accordance with movements of the carriage away from and towards a fixed terminal or socket from which the cord extends. Alternatively,it has been proposed to use a flat, flexibly resilient cable as the electrical connecting member, and to increase the inherent resiliency of the cable by mounting a leaf spring therealong as a guide member to prevent entangling of the cable in adjacent structures during movement of the carriage. As still another possible arrangement of the electrical connecting member, it has been proposed to employ therefor a cable inserted, for at least part of its length, in a resiliently flexible tube which tends to keep the cable straight, but which can be resiliently bent up to approximately a 180° turn for accommodating movements of the carriage.

However, all these schemes for controlling and preventing snagging of the electrical connecting member have disadvantages. When an elastically coiled electric cord is used, the maximum length of the extended cord is about three times its minimum or contracted length. Thus, the cord, even when fully contracted, takes up more space than is desired. Similarly, when a flat, flexibly resilient cable is employed either alone or with a leaf spring to increase its resiliency, or when the cable is inserted in a resilient tube, undesirably large spaces are required for such arrangements, particularly when large movements of the carriage are to be effected and sharp bends in the cable are to be avoided.

US-A-3 690 479 discloses an apparatus including all the features defined in the preamble of claims 1 and 5.

According to one aspect of the invention there is provided an apparatus for selectively supplying and reproducing cassettes or cartridges and which includes a plurality of reproducing and/or recording means, a plurality of cassette or cartridge storage bins arrayed in first and second orthogonally related directions and each able to store a cassette or cartridge therein, transporting means movable in said first and second directions for selectively transporting cassettes or cartridges between said storage bins and between said storage bins and said reproducing and/or recording means, and an elongated, flexible electrical connecting member extending from a fixed source of electrical control signals to said transporting means and being of a length to permit movements of said transporting means in said first direction, characterised by: first movable roller means around which said electrical connecting member extends to form a bight therein, means mounting said first movable roller means for movements in said first direction, second movable roller means mounted for reciprocal movements in a path perpendicular to the axis of said second roller means, a first elongated, flexible mechanical connection connected at one end of said transporting means and at its other end to a stationary anchor, said first mechanical connection extending around said second movable roller means for moving it in said path in response to movements of said transporting means in said first direction, and a second elongated, flexible mechanical connection extending between said first and second movable roller means for moving said first roller means in said first direction in response to movements of said second roller means in said path so as to avoid slackness in said bight of said electrical connecting member.

According to another aspect of the invention there is provided apparatus for selectively supplying and reproducing cassettes or cartridges and which includes a plurality of reproducing and/or recording means, a plurality of cassette storage bins arrayed in horizontal and vertical directions and each able to store a cassette or cartridge therein, and transporting means for selectively transporting cassettes or cartridges between said storage bins and between said storage bins and said reproducing and/or recording means;
said transporting means comprising:
horizontally extending upper and lower fixed guide rails which are vertically spaced apart;
upper and lower slider members movable along said upper and lower fixed guide rails, respectively;
slider driving means for driving said upper and lower slider members along said fixed guide rails;
movable guide rail means extending vertically between said upper and lower slider members;
carriage means mounted on said movable guide rail means for vertical movement therealong and being able to receive a cassette or cartridge from, and to discharge a cassette or cartridge into a selected one of said storage bins or of said reproducing and/or recording means with which said carriage means is registered; and
an elongated, flexible electrical connecting member extending from said upper slider member to said carriage means for supplying electrical control signals to said carriage means and having a length sufficient to accommodate said movement of said carriage means along said movable guide rail means;
characterised in that said transporting means further comprises:
movable roller means under which said electrical connecting member extends for forming a bight therein; and
means guiding said movable roller means for movements along said movable guide rail means under the influence of gravity so that the weight of said movable roller means acts to take up slack in said electrical connecting member.

The invention will now be described by way of example with reference to the accompanying drawings, throughout which like parts are referred to by like references, and in which:
Figure 1 is a front elevational view of an embodiment of video cassette auto-changer in accordance with the present invention;
Figure 2 is a top plan view of the auto-changer;
Figure 3 is a side elevational view of the auto-changer;
Figure 4 is an enlarged, exploded perspective view of a mechanism for movably supporting the upper end of a vertical guide rail of the auto-changer;
Figure 5 is an enlarged, fragmentary front elevational view of the upper end portion of the vertical guide rail and of the mechanism for movably mounting it on a fixed upper guide rail of the auto-changer;

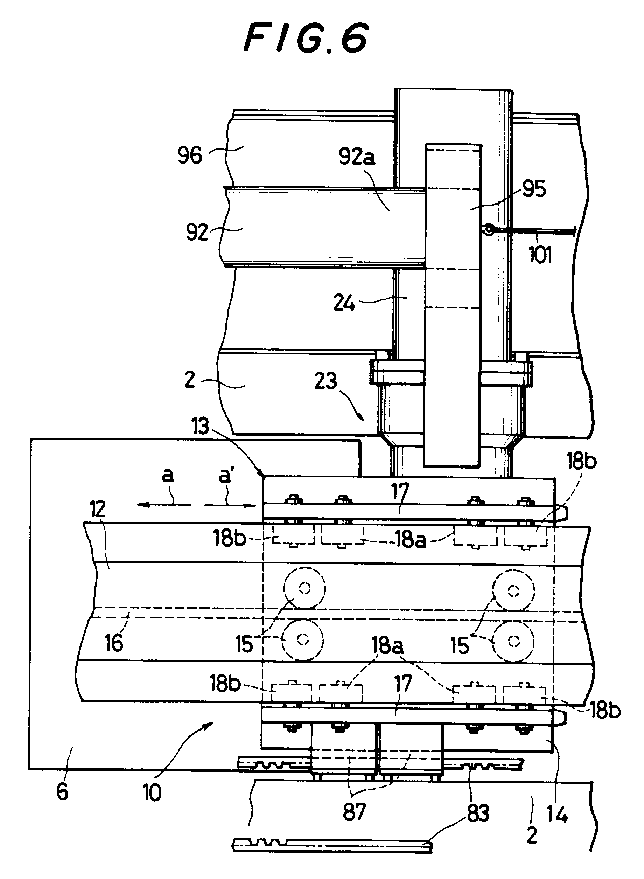

Figure 6 is a fragmentary top plan view of the mechanism of Figure 5;
Figure 7 is a sectional view taken along the line VII-VII of Figure 5;
Figure 8 is a sectional view taken along the line VIII-VIII of Figure 7;
Figure 9 is an enlarged perspective view of a mechanism for mounting the lower end portion of the vertical guide rail with respect to a lower fixed guide rail in the auto-changer;
Figure 10 is a fragmentary front elevational view of the mechanism of Figure 9;
Figure 11 is a sectional view taken along the line XI-XI of Figure 10;
Figure 12 is an exploded perspective view showing details of the vertical guide rail and of the mechanism for movably mounting a carriage thereon in the auto-changer;
Figure 13 is an enlarged sectional view taken along the line XIII-XIII of Figure 5;
Figure 14 is a perspective view of a mechanism in the auto-changer for taking-up the slack in an elongated, flexible electrical connecting member through which electrical control and/or drive signals are transmitted during movements of a cassette transporting device over large horizontal distances;
Figures 15A and 15B are diagrammatic views illustrating the mechanism of Figure 14 in two different extreme positions thereof;
Figure 16 is a fragmentary perspective view of a mechanism in the auto-changer for taking-up slack in an elongated flexible electrical connecting member through which electrical control signals are supplied to the carriage while permitting vertical movements of the carriage on the vertical guide rail; and
Figures 17A and 17B are diagrammatic side elevational views representing the mechanism of Figure 16 in two different extreme positions thereof.

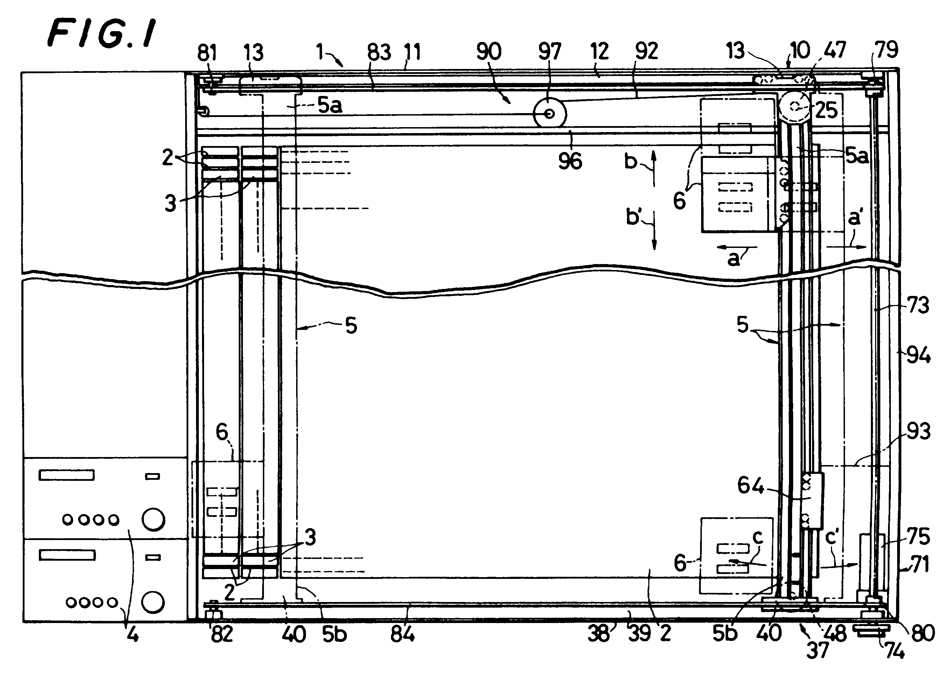

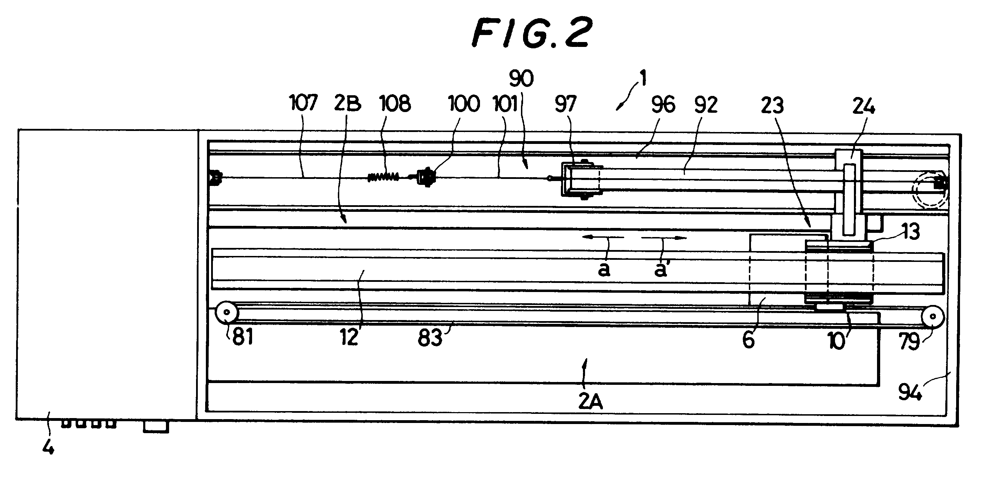

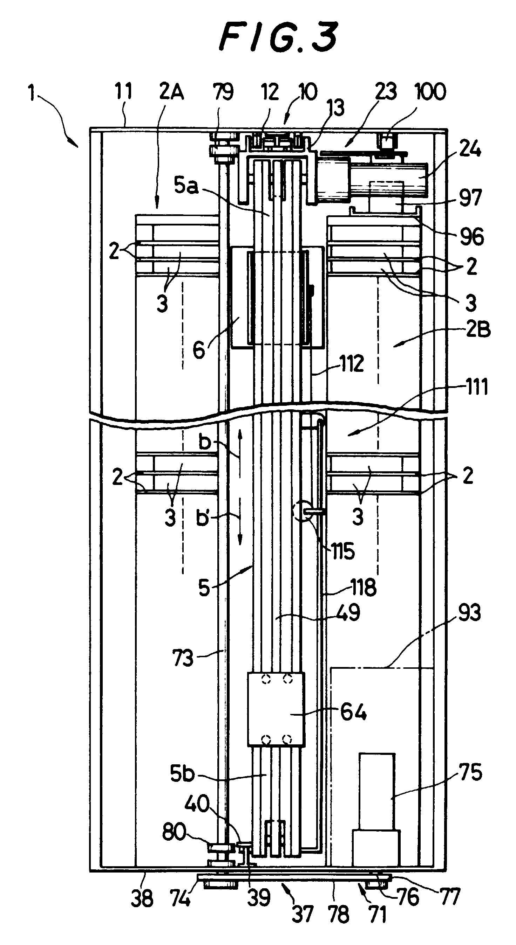

Referring initially to Figures 1 to 3, the embodiment of video cassette auto-changer comprises an upright, rectangular housing 1 having a large number of cassette storage bins 2 arrayed therein in orthogonally related directions, that is, in vertical stacks which are arranged horizontally in succession, and which are each arranged to store a video tape cassette 3 therein. As is apparent from Figures 2 and 3, the stacks of storage bins 2 are arranged in front and rear banks 2A and 2B that are spaced apart to define an aisle therebetween. A plurality of reproducing and/or recording devices, such as, VTRs 4, are stacked vertically one above the other at one side of the housing 1, and are of a so-called side-loading type, so as to be each capable of receiving a cassette 3 at the side of the respective VTR 4 facing the aisle between the banks 2A and 2B of storage bins 2. A movable guide rail 5 extends vertically in the aisle between the front and rear banks 2A and 2B of storage bins 2 and is movable horizontally in the directions of the arrows a and a' in Figure 1, as hereinafter described in detail. A cassette feeder or carriage 6 is mounted on the guide rail 5 for movements vertically therealong in the directions indicated by the arrows b and b' in Figure 1, as hereinafter described in detail.

In operation of the auto-changer, a selected cassette 3 is removed by the carriage 6 from a respective storage bin 2, whereupon the carriage 6 is moved horizontally in the direction of the arrow a and vertically in the direction of the arrow b or b' so as to register with the side-loading port or opening of a selected one of the VTRs 4, and the transported cassette 3 is then transferred from the carriage 6 into the selected VTR 4 for reproducing or recording a signal on the tape in the cassette 3. After the desired recording or reproducing operation has been performed in the selected VTR 4, the used cassette 3 is removed by the carriage 6 which is then moved horizontally in the direction of the arrow a' and vertically in the direction of the arrow b or b' for registering the carriage 6 with the storage bin 2 into which the used cassette 3 is to be returned. Then, the returned cassette 3 is transferred from the carriage 6 to the storage bin 2 with which it is registered.

A supporting structure 10 for the upper end portion 5a of the guide rail 5 includes a substantially horizontal top plate 11 of the housing 1 to the underside of which there is suitably secured a substantially horizontal upper guide rail 12, and an upper slider mechanism 13 mounted on the upper guide rail 12 for movements therealong in the directions of the arrows a and a'.

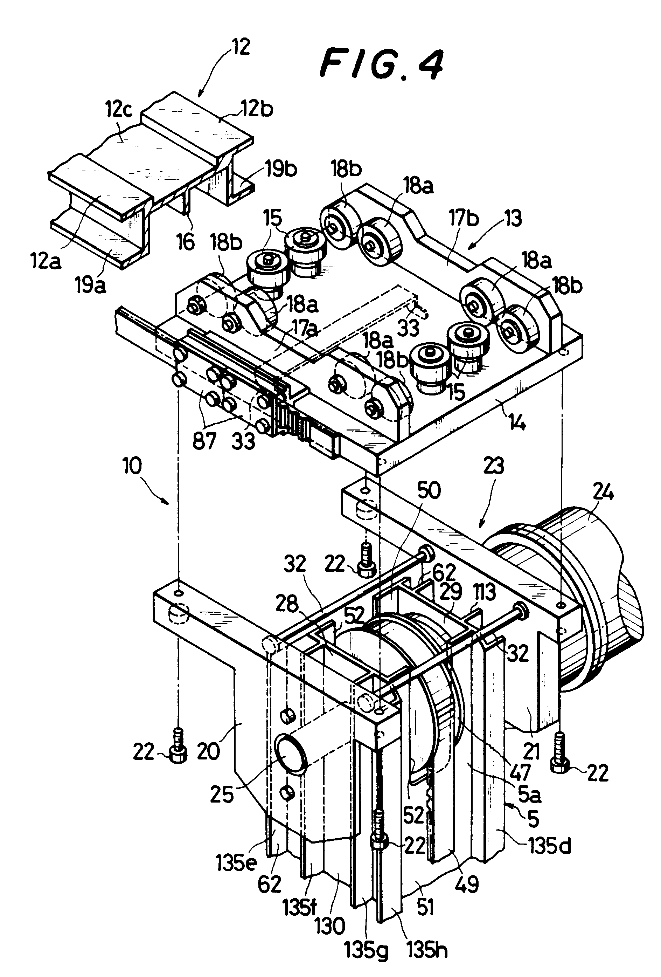

The upper guide rail 12 is shown, particularly in Figure 2, to be disposed above the aisle between the front and rear banks 2A and 2B of storage bins 2. As shown in Figure 4, the upper guide rail 12 comprises two oppositely facing C-shaped sections 12a and 12b connected by a horizontal web 12c from which a central flange 16 depends.

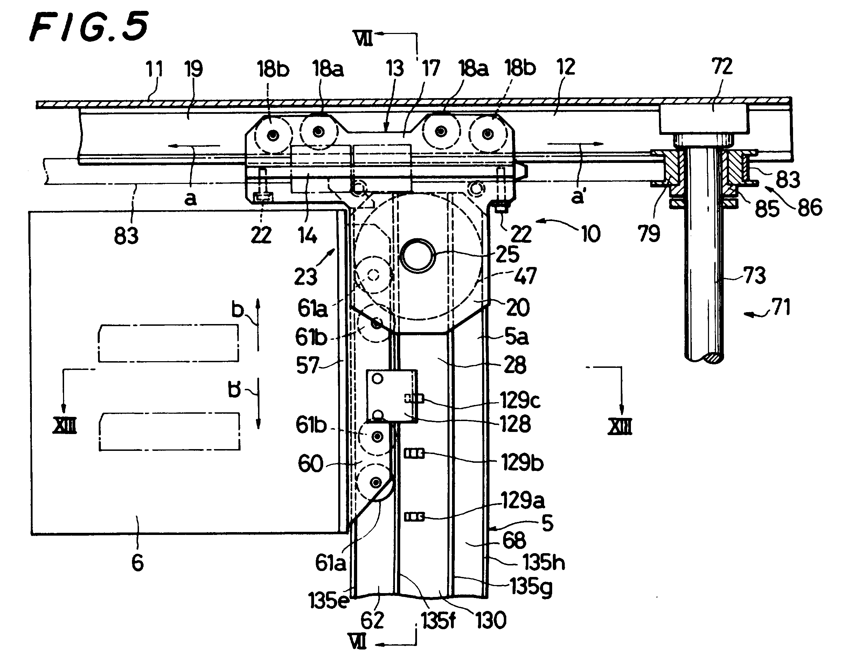

The slider mechanism 13 includes a horizontal plate 14 with flanges 17a and 17b directed upwardly along the front and rear portions of the plate 14. Front and rear guide rollers 15 are mounted on the opposite side portions of the plate 14 midway between the flanges 17a and 17b for rotation about respective vertical axes and are positioned for close rolling engagement with the opposite side surfaces of the flange 16 of the guide rail 12. Two inner guide rollers 18a and two outer guide rollers 18b are mounted at the rearwardly facing side of the flange 17a and at the forwardly facing side of the flange 17b, and are rotatable about respective horizontal axes. The rollers 18a and 18b on the flange 17a extend into a forwardly opening horizontal guide groove 19a defined by the section 12a of the guide rail 12, while the rollers 18a and 18b mounted on the flange 17b similarly extend into a rearwardly opening horizontal guide groove 19b defined by the section 12b of the guide rail 12. As shown particularly in Figure 5, the axes of the inner rollers 18a are disposed slightly higher than the axes of the outer rollers 18b, with the result that the guide rollers 18a are in rolling contact with the downwardly facing upper surfaces of the respective guide grooves 19a and 19b, while the guide rollers 18b are in rolling contact with the upwardly facing lower surfaces of the respective guide grooves 19a and 19b. By reason of the foregoing, the slider mechanism 13 is smoothly guided by the rollers 15, 18a and 18b for movements along the upper guide rail 12 in the horizontal directions indicated by the arrows a and a'.

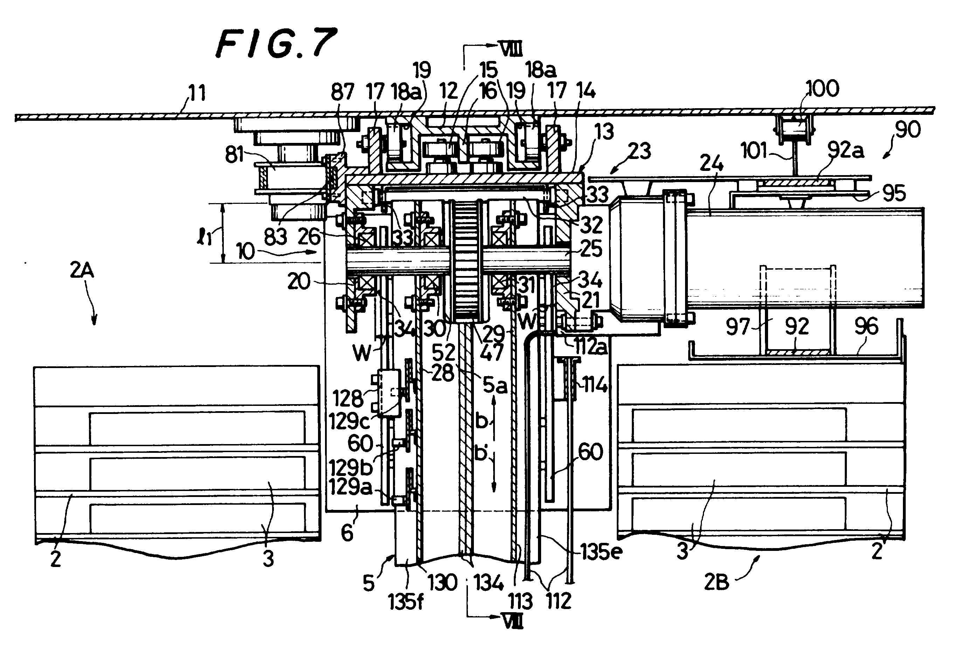

Front and rear support plates 20 and 21 (Figures 4 and 7) depend from the front and back edge portions of the horizontal plate 14 and are fixed thereto by bolts 22. A vertical drive mechanism 23 which will be described in detail hereinafter generally comprises a geared motor 24 fixed to the back surface of the support plate 21 and having a drive shaft 25 which extends through the support plate 21 and is supported at its forward end in a bearing 26 (Figure 7) carried by the support plate 20.

A pair of bearings 30 and 31 (Figure 7), which may be in the form of ball bearings, are fixed to the upper end portion 5a of the guide rail 5 at the inner side surfaces of front and rear walls 28 and 29 of a box-like structure forming the vertical guide rail 5. The driving shaft 25 is inserted in the bearings 30 and 31 with the result that the upper end portion 5a of the guide rail 5 is pivotally suspended from the driving shaft 25, and hence is mounted on the slider mechanism 13 for movements with the latter along the horizontal upper guide rail 12 and for pivotal movements relative to the slider mechanism 13 about the axis of the drive shaft 25. As shown in Figure 7, spaces or clearances 34 having a width w are provided between the upper end portion 5a of the guide rail 5 and the support plates 20 and 21, respectively.

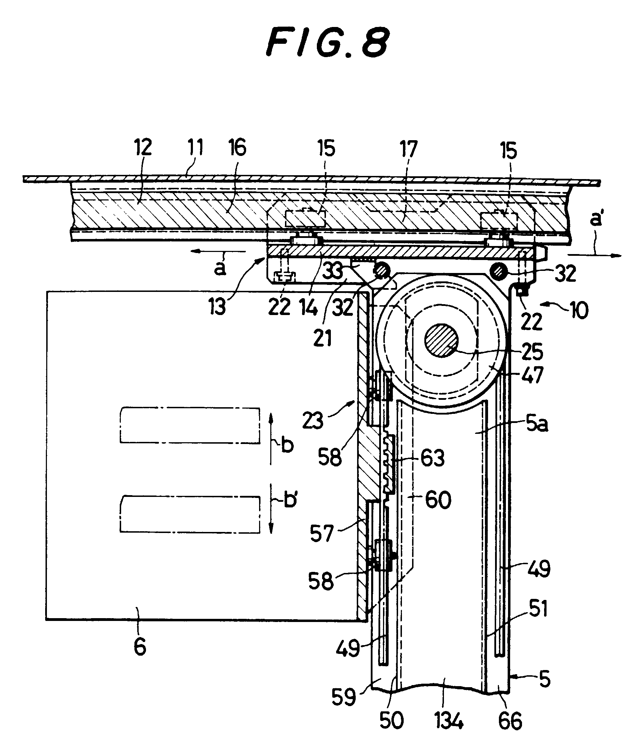

In order to facilitate the suspension of the guide rail 5 from the slider mechanism 13, the upper end portion 5a of the guide rail 12 is initially mounted on the drive shaft 25 at a time when the support plates 20 and 21 are disconnected from the horizontal plate 14, as shown in Figure 4. At such time, the support plates 20 and 21 can be secured to each other by a pair of left and right connecting rods 32. Thereafter, one of the connecting rods 32 is engaged with a hook bracket 33 secured to the undersurface of the horizontal plate 14, as shown in Figure 8, for temporarily suspending the guide rail 5 from the slider mechanism 13 until the bolts 22 can be installed for securing the support plates 20 and 21 to the horizontal plate 14.

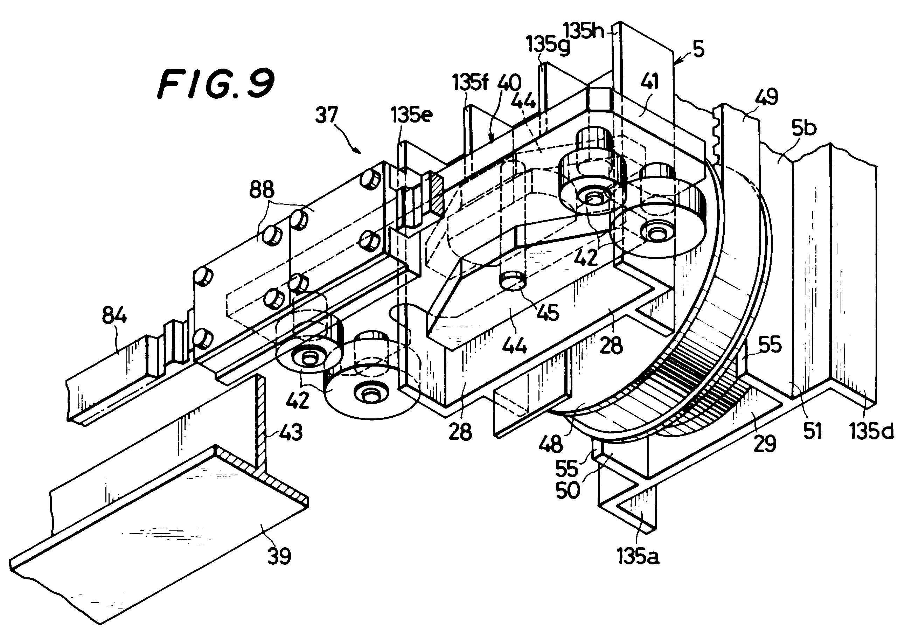

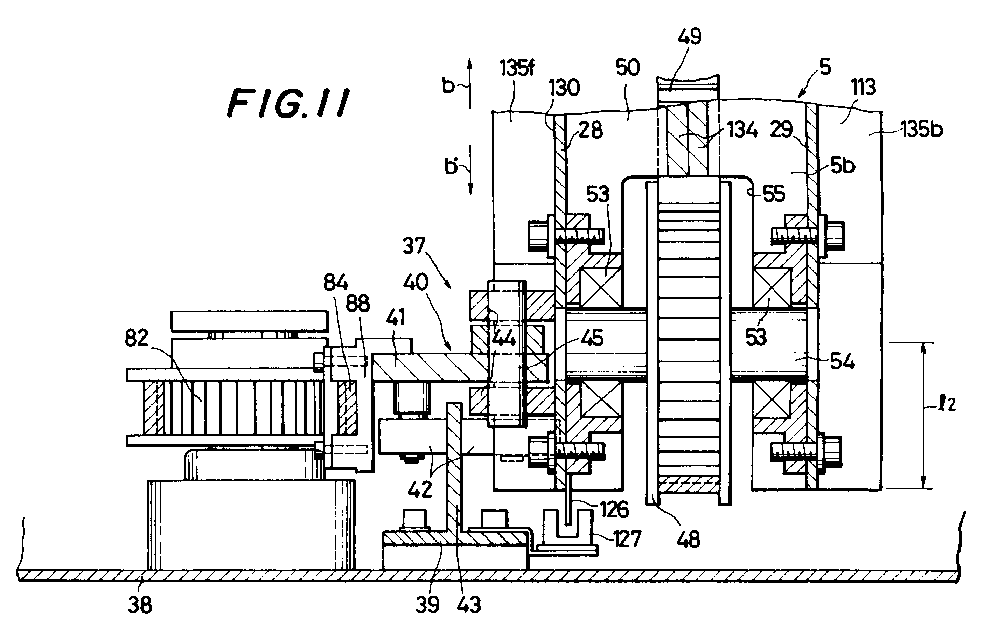

Returning to Figures 1 and 3, it will be seen that a support mechanism 37 for a lower end portion 5b of the guide rail 5 generally comprises a bottom plate 38 extending along the housing 1, a horizontal lower guide rail 39 fixed to the upper surface of the bottom plate 38 under the aisle between the banks 2A and 2B of the storage bins 2, and a lower slider mechanism 40 movable along the guide rail 39 in the directions of the arrows a and a'. As shown particularly in Figures 9 and 11, the horizontal lower guide rail 39 is preferably of inverted T-shaped cross-section so as to define a vertical, upwardly directed rib 43 extending along the guide rail 39 and being received between two pairs of front and rear guide rollers 42 depending from a horizontal plate 41 of the slider mechanism 40 at laterally spaced-apart positions and being rotatable about respective vertical axes. The guide rollers 42 guide the slider mechanism 40 along the guide rail 39 while permitting vertical movements of the slider mechanism 40 relative to the guide rail 39.

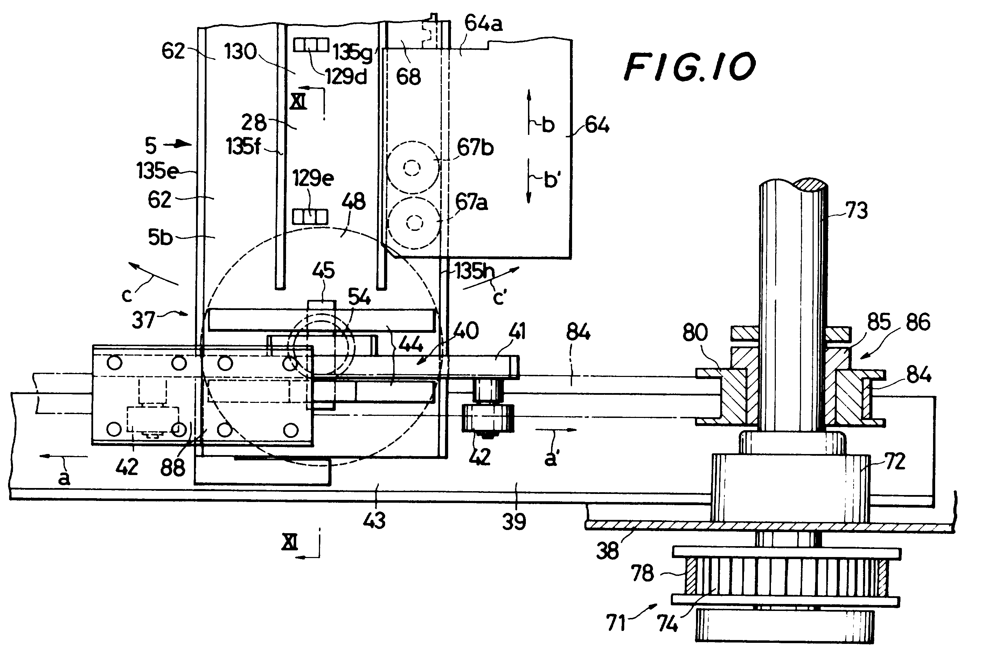

As shown in Figures 9 to 11, a pair of vertically spaced flange members 44 are directed forwardly from the front wall 28 of the guide rail 5 at the lower end portion 5b. The horizontal plate 41 of the slider mechanism 40 extends rearwardly between the flange members 44 and is pivotally connected to the latter by a vertical pivot pin 45. Therefore, the lower slider mechanism 40, in moving along the guide rail 39, is free to be angularly displaced about the vertical axis of the pin 45 relative to the guide rail 5 for accommodating any deviations of the upwardly directed rib 43 of the guide rail 39 from a plane parallel to the plane of the flange 16 of the upper guide rail 12. Furthermore, since the slider mechanism 40 is free to be displaced vertically with respect to the lower guide rail 39, the guide rail 5 is swingable about the horizontal axis of the drive shaft 25 from which it is suspended, at the upper end, in which case the lower end portion 5b of the guide rail 5 is displaceable in the directions indicated by the arrows c and c' in Figure 10.

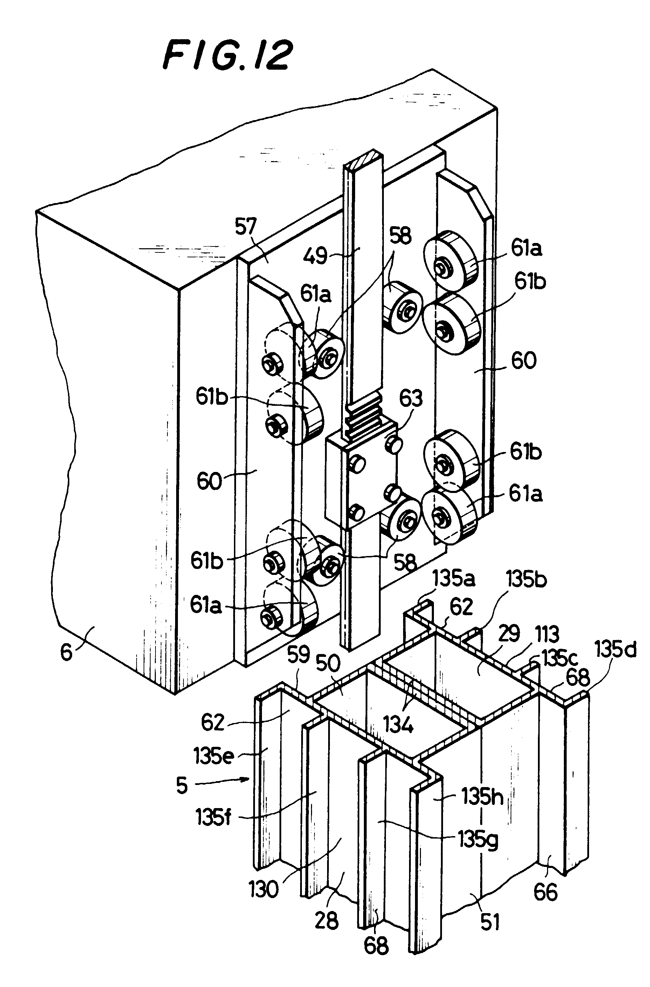

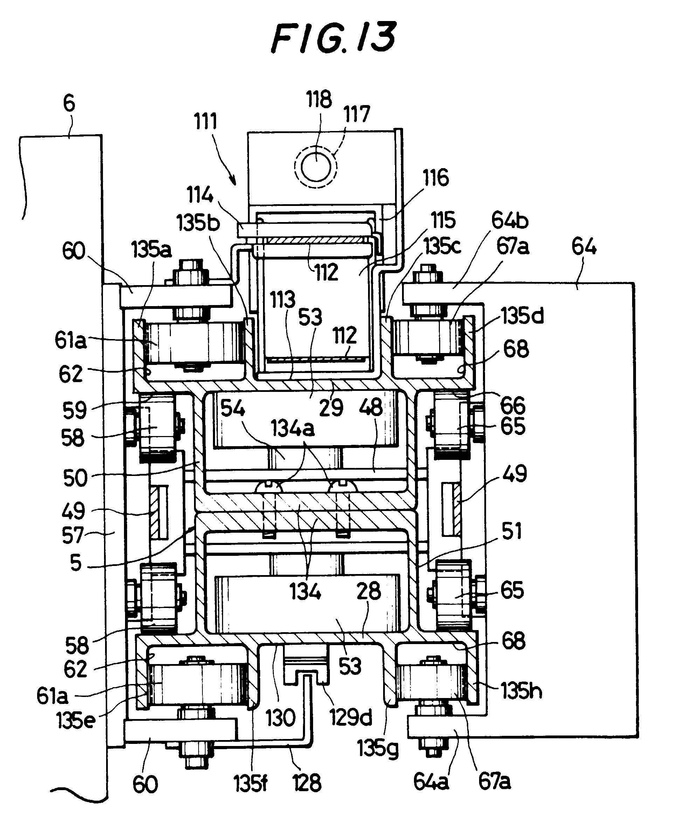

As shown particularly in Figures 12 and 13, a mounting plate 57 is fixed to the side surface of the carriage 6 facing away from the stack of VTRs 4, and upper and lower pairs of guide rollers 58 are mounted on the plate 57 for rotation about respective horizontal axes and are engageable in a guide groove 59 extending vertically along the adjacent side of the guide rail 5. For convenience in fabricating and assembling the guide rail 5 with the carriage 6, the box-like structure of the guide rail 5 is shown to be formed in two portions having rectangular sections and being secured together at abutting walls 134 by screws 134a (Figure 13) so as to define the previously mentioned front and rear walls 28 and 29 and side walls 50 and 51 extending therebetween. Side portions of the front and rear walls 28 and 29 are shown to extend laterally beyond the side walls 50 and 51, so as to define the guide grooves 59 by means of the outer surface of the side wall 50 and the confronting or inwardly directed surfaces of the projecting side portions of the front and rear walls 28 and 29. A similar guide groove 66 is provided at the opposite side of the guide rail 5 by the outer surface of the side wall 51 and the confronting or inwardly directed surfaces at the respective projecting side portions of the front and rear walls 28 and 29. Spaced apart vertical ribs 135a, 135b, 135c and 135d extend rearwardly from the rear wall 29, and spaced apart vertical ribs 135e, 13Sf, 135g and 135h extend forwardly from the front wall 28. Guide grooves 62 are defined between the ribs 135a and 135b, and the ribs 135e and 135f, respectively. Flanges 60 extend laterally from the forward and rearward edge portions of the mounting plates 57, and pairs of guide rollers 61a and 61b are mounted at the inner surfaces of the flanges 60 at upper and lower position, respectively, for rotation about horizontal axes. The guide rollers 61a and 61b extend into the guide grooves 62 and, as shown particularly in Figure 5, the axes of the guide rollers 61a are offset laterally with respect to the axes of the guide rollers 61b. Thus, the guide rollers 61a are in rolling contact with the rib 135a at one side of the guide rail 5 and with the rib 135e at the opposite side of the guide rail 5, while the guide rollers 61b are in rolling contact with the rib 135b or the rib 135f. Therefore, the mounting plate 57 and the carriage 6 thereon can be smoothly moved along the guide rail 5 with displacements relative to the latter only in the vertical direction, that is, the direction along the longitudinal axis of the guide rail 5.

As shown in Figures 10 and 13, a counterweight 64 is mounted on the guide rail 5 at the side thereof remote from the carriage 6. Upper and lower, and front and rear guide rollers 65 are mounted on the counterweight 64 for rotation about horizontal axes and a repositioned to extend into the vertical guide groove 66 defined by the side wall 51 of the guide rail 5 and by the edge portions of the front and rear walls 28 and 29 projecting beyond the side wall 51 and with which the guide rollers 65 are in rolling contact. The counterweight 64 has front and rear flanges 64a and 64b extending therefrom past the ribs 135h and 135d, respectively, of the guide rail 5 (Figure 13). Upper and lower pairs of guide rollers 67a and 67b (Figures 10 and 13) extend from the flanges 64a and 64b into guide grooves 68 defined between the ribs 135g and 135h, and between the ribs 135c and 135d, respectively. As shown in Figure 10, the horizontal axes of rotation of the guide rollers 67a are offset laterally a small distance relative to the horizontal axes of rotation of the guide rollers 67b,so that the guide rollers 67a effect rolling contact with the rib at one side of the guide groove 68, for example, the rib 135h in Figure 10, while the guide rollers 67b effect rolling contact with the rib 135g at the opposite side of the respective guide groove 68. Thus, the counterweight 64 is also mounted for smooth movements in the directions of the arrows b and b' along the guide rail 5.

The vertical drive mechanism 23 is provided to effect the controlled vertical movements of the carriage 6 in the direction of the arrows b and b' along the guide rail 5. As shown particularly in Figures 4 and 7, the vertical drive mechanism 23 includes, in addition to the previously mentioned motor 24, a toothed driving pulley 47 fixed to the motor shaft 25 and located in a generally U-shaped cut-out 52 formed in the side walls 50 and 51 at the upper end portion 5a of the guide rail 5. As shown particularly in Figure 11, bearings 53, which may be in the form of ball bearings, are fixed to the inner sides of the front and rear walls 28 and 29 of the guide rail 5 at the lower end thereof, and a driven shaft 54 is rotatably mounted in the bearings 53. A toothed driven pulley 48 is fixed on the driven shaft 54 and is accommodated in a U-shaped cut-out 55 formed in the lower portions of the side walls 50 and 51 of the guide rail 5. A timing belt 49 extends around the pulleys 47 and 48, and runs of the belt 49 between the pulleys 47 and 48 are disposed centrally in the grooves 59 and 66, respectively, of the guide rail 5. The run of the timing belt 49 in the guide groove 59 is secured by a clamp 63 to the mounting plate 57 of the carriage 6, and the counterweight 64 is similarly secured to the run of the timing belt 49 in the guide groove 66.

A horizontal drive mechanism 71 is provided to effect movements of the guide rail 5 in the horizontal directions of the arrows a and a'. As shown in Figures 5 and 10, the horizontal drive mechanism 71 includes a vertical shaft 73 rotatably mounted, at its upper and lower ends, in bearings 72 fixed to the top and bottom plates 11 and 38 of the housing 1 adjacent to the side thereof remote from the stacked VTRs 4. A toothed driven pulley 74 is fixed to the lower end of the shaft 73 and is engaged by a timing belt 78 which extends around a toothed driving pulley 77 fixed on a driving shaft 76 of a drive motor 75 mounted on the bottom plate 38 (Figure 3). A pair of upper and lower toothed driving pulleys 79 and 80 are mounted on upper and lower portions of the shaft 73. Upper and lower toothed driven pulleys 81 and 82 (Figures 1 and 2) are mounted on the top and bottom plates 11 and 38 for rotation about vertical axes adjacent to the side of the housing 1 near the stack of VTRs 4. An upper timing belt 83 runs around the driving pulley 79 and the driven pulley 81, and a lower timing belt 84 runs around the driving pulley 80 and the driven pulley 82. The driving pulleys 79 and 80 are adjustably secured to the shaft 73 by releasable friction couplings 85 which form upper and lower drive synchronizing means 86. In other words, the rotational positions of the upper and lower driving pulleys 79 and 80 can be adjusted relative to each other for a purpose hereinafter described in detail.

As shown in Figures 7 and 11, a belt clamp 87 secures a run of the upper timing belt 83 to the horizontal plate 14 of the upper slider mechanism 13, and a belt clamp 88 similarly secures a run of the lower timing belt 84 to the horizontal plate 41 of the lower slider mechanism 40.

The operations of the horizontal drive mechanism 71 and the vertical drive mechanism 23 in effecting selected horizontal and vertical movements of the carriage 6 will now be described.

Upon forward or reverse rotation of the drive motor 75, the shaft 73 is suitably driven through the toothed pulleys 74 and 77 and the timing belt 78. The upper and lower driving pulleys 79 and 80 are rotated with the shaft 73 with the result that the upper and lower timing belts 83 and 84 are driven for moving the slider mechanisms 13 and 40 in the direction of the arrow a or a' along the respective upper and lower guide rails 12 and 39. The vertical guide rail 5, in being connected to the upper and lower slider mechanisms 13 and 40 at the shafts 25 and 45, is similarly moved in the direction of the arrow a or a'. The movement of the vertical guide rail 5, and hence of the carriage 6 thereon, in the direction of the arrow a or a' may be limited in response to the detection of a shutter plate 126 (Figure 11) depending from the lower end of the guide rail 5 by suitable sensors 127 fixed along the horizontal lower guide rail 39.

Upon the forward or reverse rotation of the drive motor 24, the driving pulley 47 is similarly rotated to drive the timing belt 49 with the result that the carriage 6 secured to a run of timing belt 49 by the clamp 63 is moved vertically along the guide rail 5 in the direction of the arrow b or b'. At the same time, the counterweight 64 is moved vertically along the guide rail 5 in the direction opposed to the movement of the carriage 6 and balances the weight thereof. The vertical movements of the carriage 6 along the guide rail 5 may be limited in response to the detection of a shutter plate 128 fixed to one of the flanges 60 on the mounting plate 57 by a plurality of sensors 129a to 129e (Figures 5 and 10) secured to the front wall 28 of the guide rail 5 within a groove 130 defined between the ribs 135f and 135g.

The upper sensors 129a, 129b and 129c arranged in succession on the upper portion of the guide rail 5 (Figure 5) are successively encountered by the shutter plate 128 as the carriage 6 nears the upper limit of its vertical movement. For example, the detection of the shutter 128 by the sensor 129a may signal that deceleration of the upward movement of the carriage 6 is to be commenced, while the detection of the shutter plate 128 by the sensor 129c signals the upper limit of the permissible movement. The intermediate sensor 129b detects the shutter plate 128 for establishing a so-called 'origin' for the vertical movement of the carriage 6, that is, a point at which the positional relationship of the carriage 6 to the several storage bins 2 is predetermined. The lower sensors 129d and 129e (Figure 10) cooperate with the shutter plate 128 for indicating respective positions at which deceleration of the downward movement of the carriage 6 should commence and at which the downward movement of the carriage 6 should cease.

It will be appreciated that, when the described auto-changer is designed to accommodate hundreds of cassettes 3 in the storage bins 2, as is intended, the apparatus becomes rather large, and the carriage 6 has to be moved over large distances in both the vertical and horizontal directions. Thus, the horizontal upper and lower guide rails 12 and 39 and the respective upper and lower plates 11 and 38 of the housing 1 are long and may not be precisely parallel to each other. By reason of the pivotal suspension of the guide rail 5 from the slider mechanism 13 at the shaft 25, even when the guide rail 12 is slightly inclined so as similarly to incline the slider mechanism 13 moving therealong, the guide rail 5 may remain vertical during its movement in the direction of the arrow a or a' for ensuring that the carriage 6 will properly register with the storage bins 2 if they remain horizontal. It should be understood that, by rotationally adjusting the upper and lower driving pulleys 79 and 80 relative to each other on the shaft 73, as is possible by reason of the releasable friction couplings 85 which form the drive synchronizing means 86, the guide rail 5 can be made to swing a small distance about the pivoting axis of the shaft 25 in the direction of the arrow c or c' in Figure 10 relative to the slider mechanism 13 so as suitably to angle or incline the guide rail 5 for ensuring that the carriage 6 thereon will be properly aligned with the various storage bins 2 in the event that they are not precisely horizontal. Such adjustments for ensuring proper alignment of the carriage 6 with the several storage bins 2 in an apparatus of large size are made possible by the pivotal connection of the vertical guide rail 5 to the upper slider mechanism 13 at the shaft 25, and further by the fact that the lower slider mechanism 40 can move up and down relative to the lower guide rail 39. Thus, inclination of the guide rail 5 from the vertical, or with respect to a perpendicular to the direction along the upper guide rail 12 is not accompanied by longitudinal stressing of the guide rail 5 or by jamming of the slider member 13 on the guide rail 12.

Further, since the shaft 25 of the motor 24 is used for pivotally suspending the guide rail 5 from the slider mechanism 13, the pivotal suspension of the guide rail 5 is simplified, that is, a pivot pin is not required just for that purpose. Moreover, by reason of the clearances 34 between the guide rail 5 and the support plates 20 and 21 of the slider mechanism 13, the vertical flanges 60 extending from the mounting plate 57 of the carriage 6 can extend into the clearances 34 at the upper limit of the vertical movement of the carriage 6, thereby increasing the permissible range of vertical movement of the carriage 6.

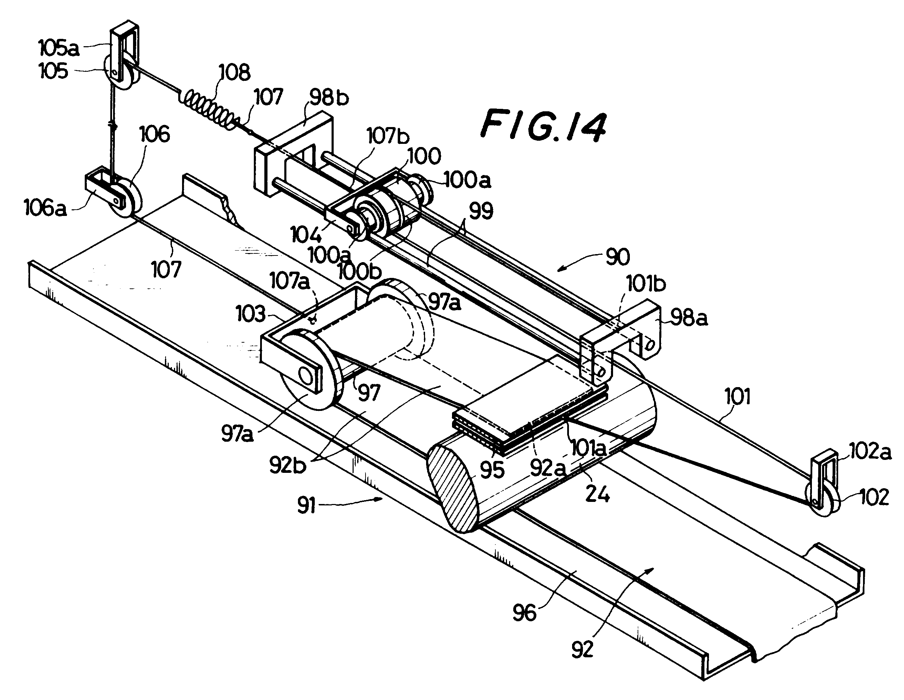

Referring now to Figures 1 to 3, 7 and 14, it will be seen that the auto-changer further comprises a mechanism 90 for avoiding slackness in an elongated flexible electrical connecting member 92, for example, in the form of a flat, flexible electric cable, for supplying electrical control or drive signals to the drive motor 24 of the vertical drive mechanism 23 and to the carriage 6, and which is relatively long for accommodating the large horizontal movements encountered. More particularly, in the embodiment, the electrical member 92 is guided upward along a side plate 94 of the housing 1 from a fixed power source 93 (Figures 1 and 3) located within the lower portion of the housing 1 at the side remote from the stacked VTRs 4. As shown in Figures 7 and 14, a horizontal guide shelf 96 extends laterally above the rear bank 2B of the storage bins 2. After travelling upwardly along the side plate 94 from the power source 93, the electrical member 92 is bent to extend along the shelf 96, with the end 92a of the connecting member 92 remote from the power source 93 being connected to a base or socket 95 provided at the top of the drive motor 24. The length of the electrical member 92 is at least sufficient to permit the full range of the required movements of the motor 24 with the upper slider mechanism 13 along the horizontal guide rail 12. Of course, the vertical guide rail 5 suspended from the slider mechanism 13 and the carriage 6 movable vertically on the vertical guide rail 5 are all movable with the slider mechanism 13 and the motor 24 in the horizontal directions, and, for the sake of convenience, are hereinafter all referred to, in the aggregate, as a movable member 91.

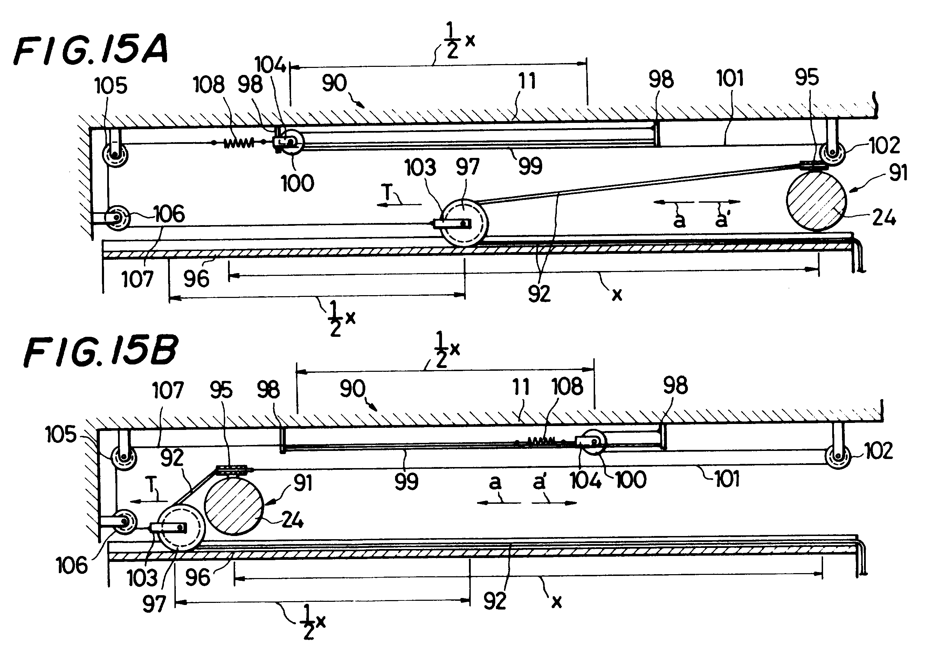

As shown particularly in Figures 14, 15A and 15B, the electrical member 92 extending along the shelf 96 is turned upwardly and around a first movable roller 97 which has enlarged end flanges 97a in rolling contact with the shelf 96. It will be seen that portions 92b of the electrical member 92 extending to and from the roller 97 form a bight in the electrical member 92. A pair of parallel guide rods 99 are disposed above the shelf 96 and are supported, at their opposite ends, in brackets 98 depending from the top plate 11 of the housing 1 so as to extend parallel to the direction of the horizontal rolling movements of the roller 97 on the shelf 96. A second movable roller 100 has circumferential grooves 100a in its opposite end portions which receive the guide rods 99 so that the roller 100 can move by rolling along the guide rods 99 in a path perpendicular to the axis of the roller 100, and more particularly in a horizontal path parallel to the path of movement of the roller 97 on the shelf 96. A first elongated, flexible mechanical connection, for example, in the form of a wire 101, is connected at one end 101a to the base 95 on the motor 24, and hence to the upper slider mechanism 13, while the other end 101b of the wire 101 is connected to the base 95 around a pulley 102 rotatable in a suitably fixed bracket 102a, and then the wire 101 extends around the roller 100 in a guide groove 100b at the middle thereof, prior to being anchored at the end 101b in the bracket 98a. A second elongated, flexible mechanical connection, for example, in the form of a wire 107, extends between the first and second movable rollers 97 and 100. More specifically, as shown, one end 107a of the wire 107 is connected to a yoke 103 in which the roller 97 is rotatably mounted, while the other end 107b of the wire 107 is connected to a yoke 104 in which the roller 100 is rotatably mounted. Further, intermediate its ends, the wire 107 extends around guide pulleys 105 and 106 that are rotatable in suitably mounted fixed brackets 105a and 106a, respectively. A tension spring 108 is interposed in the wire 107 and is initially stressed to exert a biasing force by which the movable rollers 97 and 100 are urged along the shelf 96 and the guide rods 99, respectively, in the direction of the arrow a in Figures 15A and 15B. The bight of the electrical member 92 is thus pulled by the roller 97 in the direction of the arrow a, thereby to avoid slack in the electrical member 92. Due to the mechanical connection provided by the wire 101 extending from the movable member 91, that is, the upper slider mechanism 13 and the components movable therewith, around the fixed roller 102 and then the movable roller 100 to the fixed anchor at the end 101b, when the movable member 91 is moved laterally in the direction of the arrow a or a', the second movable roller 100 is moved laterally in the opposite direction, that is, in the direction of the arrow a' or the arrow a, respectively.

It will be seen that, when the movable member 91 is moved by the horizontal drive mechanism 71 through a distance x in the direction of the arrow a, for example, from the position shown in Figure 15A to the position shown in Figure 15B, the end 101a of the wire 101 fixed to the movable member 91 is also moved by the distance x. However, since the wire 101 extends around the second movable roller 100, that is, a bight is formed in the wire 101, the roller 100 is only moved through a distance x/2 in the direction of the arrow a'. In response to such movement of the roller 100, the wire 107 pulls the roller 97 in the direction of the arrow a through a distance of x/2, for example, from the position shown in Figure 15A to the position shown in Figure 15B. Since the electrical member 92 extends around the roller 97, and thus has a bight formed therein, the movement of the roller 97 in the direction of the arrow a through the distance x/2 is equivalent to the movement of the movable member 91 in the same direction, that is, in the direction of the arrow a, through the distance x. Furthermore, since the rollers 97 and 100 move through the same distances, the spring 108 interposed in the wire 107 between the rollers 97 and 100 maintains a predetermined tension. In other words, regardless of the position of the movable member 91, a predetermined tension T is maintained in the electrical member 92 as a result of the spring 108 and slack in the electrical member 92 is avoided. Even if the distance over which the movable member 91 is to be moved in the horizontal direction is very large, the total space required for accommodating the electrical member 92 and the mechanism 90 for avoiding slack therein is minimized by the fact that the rollers 97 and 100 are moved through distances that are only half the distances through which the movable member 91 is moved. Further, since a predetermined tension T is always maintained in the electrical member 92, the response of the latter to movements of the movable member 91 is immediate and precise.

The electrical member 92 extending from the fixed source 93 to the base 95 on the motor 24 is, of course, suitable for transmitting electrical driving and control signals for the motor 24, and also for the carriage 6. However, since the carriage 6 is movable vertically on the guide rail 5, an additional flexible electrical connecting member 112, for example, in the form of a flexible, flat cable, is required for further transmitting those electrical driving and control signals required for the operations of the carriage 6. As shown particularly in Figure 7, the electrical member 112 extends from a terminal or connecting block 112a at the lower portion of the motor 24 and extends vertically downward in a guide groove 113 defined between the vertical ribs 135b and 135c projecting from the rear wall 29 of the guide rail 5. The end portion of the electrical member 112 remote from the connecting block 112a is engaged with a suitable terminal or connecting block 114 on the carriage 6. The length of the electrical member 112 is, of course, sufficient to accommodate the full range of the possible movements of the carriage 6 vertically along the guide rail 5. Since such movements of the carriage 6 along the guide rail 5 may be relatively large, the auto-changer further comprises a mechanism 111 for avoiding slackness in the electrical member 112 required for accommodating such movements while supplying electrical control or driving signals from the connecting block 112a at the motor 24 to the connecting block 114 at the carriage 6.

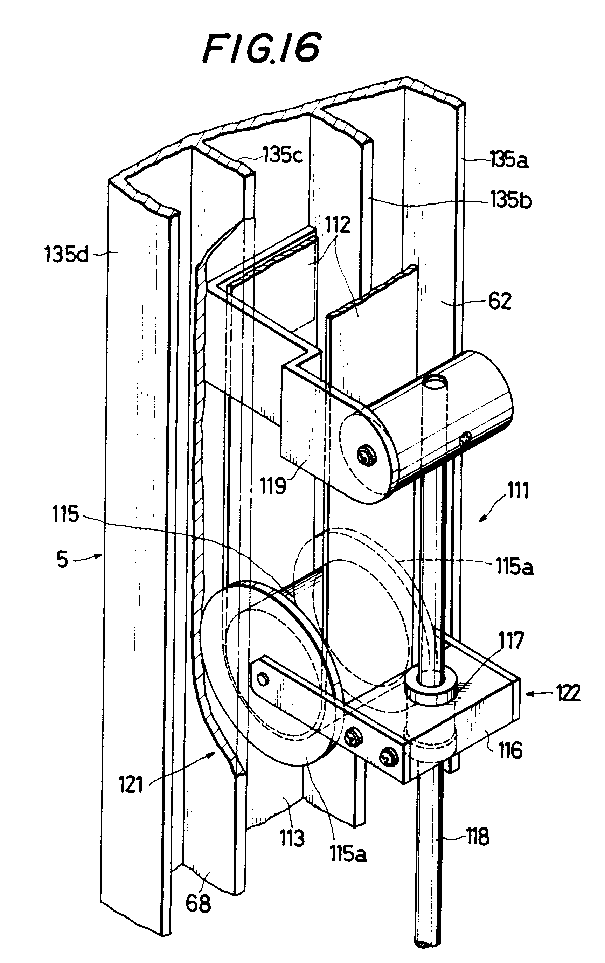

As shown in Figure 16, the mechanism 111 includes a roller 115 under which the electrical member 112 is looped, and having flanges 115a at its opposite ends which extend into and are guided along the vertical guide groove 113 in the guide rail 5. Thus, the guide groove 113 forms a first guide means 121 for the roller 115. A second guide means 122 for the roller 115 is formed by a yoke 116 having the roller 115 rotatably mounted therein and containing a linear bearing 117 slidably receiving a vertical guide rod 118. The upper end of the guide rod 118 is secured in a support bracket 119 fixed to the guide rail 5 approximately midway between the upper and lower ends thereof. The lower end of the guide rod 118 is supported in a bracket 120 fixed to the lower end portion of the guide rail 5. Therefore, the roller 115 is free to move vertically along the lower half of the guide rail 5 while the weight W of the roller 115 acts in the bight of the electrical member 112 for avoiding slack therein. During vertical movements of the roller 115, lateral displacements thereof are prevented by the engagement of the roller 115 in the groove 113 at the back of the guide rail 5, while forward and rearward displacements of the roller 115 are prevented by the engagement of the guide rod 118 in the linear bearing 117.

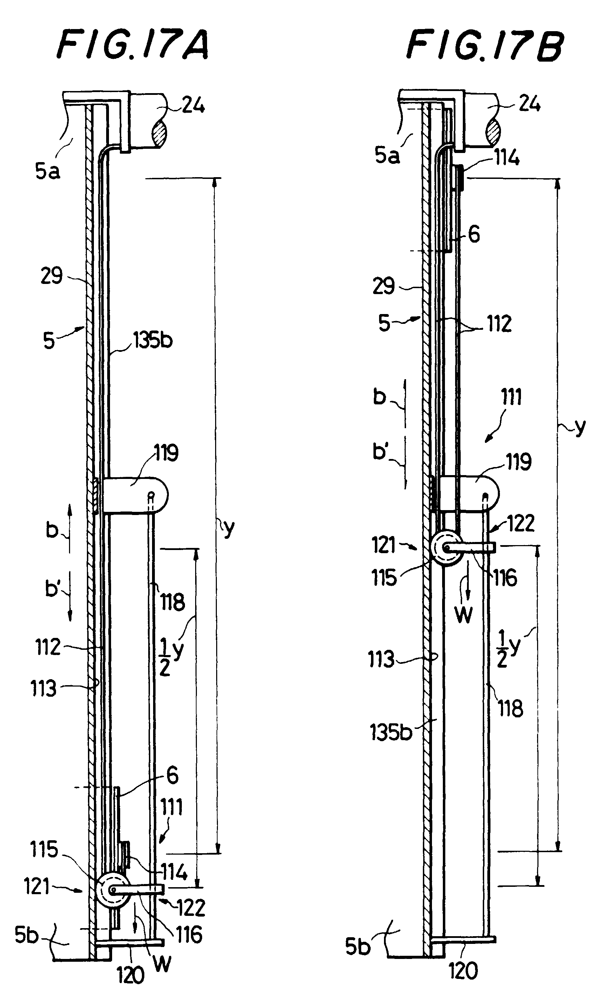

As shown in Figures 17A and 17B, when the carriage 6 is moved vertically in the direction of the arrow b' through a distance y, for example, from the position shown in Figure 17B to the position shown in Figure 17A, the movable roller 115 engaging the electrical member 112 moves in the same direction as the arrow b', but through a distance y/2, that is, a distance that is half the displacement of the carriage 6. At all such times, the electrical member 112 is maintained under tension by the weight W of the roller 115 which, as described, moves through relatively small distances for minimizing the space required therefor even when the carriage 6 undergoes large vertical movements. Since the movable roller 115 is closely guided by the vertical guide groove 113 and the vertical guide rod 118 during its vertical movements, the interference of the roller 115 with other structural or operating members of the apparatus is avoided. Thus, for example, the banks 2A and 2B of the storage bins 2 can be located very close to the guide rail 5, as shown in Figure 3.

As earlier noted with reference to Figures 12 and 13, the vertical guide rail 5 is preferably formed in two parts which can each be conveniently extruded from aluminium and then joined by the screws 134a. The various ribs identified previously as defining the guide grooves 59, 62, 66, 68 and 113 for vertically guiding the carriage 6, the counterweight 64, and the roller 115, as well as for defining the groove 130 in which the sensors 129a to 129e are conveniently located, can be conveniently formed during extrusion of the parts of the guide rail 5. Thus, the guide rail 5 is easily formed to serve a number of functions in a compact form.

It is also to be seen that, by reason of the two-part structure of the guide rail 5, the driving pulley 47 and the driven pulley 48 can be disposed within the structure of the guide rail 5 without unduly complicating the assembling. In other words, the upper and lower ends of the guide rail 5 can extend the distances 11 and 12 (Figures 7 and 11) beyond the axes of the shafts 25 and 54, respectively and, as a result thereof, the vertical range of movements of the carriage 6 along the guide rail 5 can be increased for a particular length of the guide rail 5. Further, when the guide rail 5 is extruded of aluminium, a lightweight structure is achieved and, if the guide rollers 58, 61a, 61b, 65, 67a and 67b for the carriage 6 and the counterweight 64 are formed of polyurethane or other suitable synthetic resin or plastics material, substantially noise-free operation can be achieved.

By way of summary, the auto-changer permits movements of the cassette feeder or carriage 6 over large vertical and horizontal distances while ensuring that such movements will be smoothly effected so that jamming is avoided. Moreover, in the course of such large horizontal and vertical movements, the electrical connecting members or cables 92 and 112 for transmitting electrical control and/or driving signals from a fixed source 93 to various movable elements of the apparatus, for example, to the motor 24 and then on to the carriage 6, are maintained under predetermined tensions for avoiding slackness and possible entanglement in other parts of the apparatus.

Although the invention has been specifically described in its application to a video cassette auto-changer, it will be appreciated that the invention can be similarly applied to other devices for feeding or storing different kinds of cassettes or cartridges containing tapes, disc or the like.

Attention is directed to our application EP-A-0 242 144 (87303169.4) from which this application was divided out and which has a similar disclosure but different claims to this application.

## Claims

1. Apparatus for selectively supplying and reproducing cassettes or cartridges (3) and which includes a plurality of reproducing and/or recording means (4), a plurality of cassette or cartridge storage bins (2) arrayed in first and second orthogonally related directions and each able to store a cassette or cartridge (3) therein, transporting means (6) movable in said first and second directions for selectively transporting cassettes or cartridges (3) between said storage bins (2) and between said storage bins (2) and said reproducing and/or recording means (4), and
an elongated, flexible electrical connecting member (92) extending from a fixed source (93) of electrical control signals to said transporting means (6) and being of a length to permit movements of said transporting means (6) in said first direction, characterised by: first movable roller means (97) around which said electrical connecting member (92) extends to form a bight (92b) therein, means (103) mounting said first movable roller means (97) for movements in said first direction, second movable roller means (100) mounted for reciprocal movements in a path perpendicular to the axis of said second roller means (100), a first elongated, flexible mechanical connection (101) connected at one end of said transporting means (6) and at its other end to a stationary anchor (98a), said first mechanical connection (101) extending around said second movable roller means (100) for moving it in said path in response to movements of said transporting means (6) in said first direction, and a second elongated, flexible mechanical connection (107) extending between said first and second movable roller means (97, 100) for moving said first roller means (97) in said first direction in response to movements of said second roller means (100) in said path so as to avoid slackness in said bight (98b) of said electrical connecting member (92).

2. Apparatus according to claim 1 wherein a tension spring (108) is interposed in said second mechanical connection (107) for maintaining a predetermined tension in said electrical connecting member (92).

3. Apparatus according to claim 1 wherein said path of movement of said second roller means (100) is parallel to said first direction and a bight is also formed in said first mechanical connection (101) in extending around said second roller means (100) so that, upon movement of said transporting means (6, etc.) in said first direction, said first and second roller means (97, 100) are each moved in said first direction through one-half of said movement of the transporting means (6, etc.) for avoiding said slackness of the electrical connecting member (92).

4. Apparatus according to claim 3 wherein said first direction is horizontal.

5. Apparatus for selectively supplying and reproducing cassettes or cartridges (3) and which includes a plurality of reproducing and/or recording means (4), a plurality of cassette storage bins (2) arrayed in horizontal and vertical directions and each able to store a cassette or cartridge (3) therein, and transporting means (6, etc.) for selectively transporting cassettes or cartridges (3) between said storage bins (2) and between said storage bins (2) and said reproducing and/or recording means (4);
said transporting means (6, etc.) comprising:
horizontally extending upper and lower fixed guide rails (12, 39) which are vertically spaced apart;
upper and lower slider members (13, 40) movable along said upper and lower fixed guide rails (12, 39), respectively;
slider driving means (71) for driving said upper and lower slider members (13, 40) along said fixed guide rails (12, 39);
movable guide rail means (5) extending vertically between said upper and lower slider members (13, 40);
carriage means (6) mounted on said movable guide rail means (5) for vertical movement therealong and being able to receive a cassette or cartridge (3) from, and to discharge a cassette or cartridge (3) into a selected one of said storage bins (2) or of said reproducing and/or recording means (4) with which said carriage means (6) is registered; and
an elongated, flexible electrical connecting member (112) extending from said upper slider member (13) to said carriage means (6) for supplying electrical control signals to said carriage means (6) and having a length sufficient to accommodate said movement of said carriage means (6) along said movable guide rail means (5);
characterised in that said transporting means (6, etc.) further comprises:
movable roller means (115) under which said electrical connecting member (112) extends for forming a bight therein; and
means (113, 118) guiding said movable roller means (115) for movements along said movable guide rail means (5) under the influence of gravity so that the weight of said movable roller means (115) acts to take up slack in said electrical connecting member (112).

## Patentansprüche

1. Vorrichtung zur wahlweisen Lieferung und Reproduzierung von Kassetten oder Patronen (3), die mehrere Wiedergabe- und/oder Aufzeichnungseinrichtungen (4), mehrere Kassetten- oder Patronenspeicherbehälter (2), die in einer ersten oder zweiten orthogonalen Richtung aufgereiht sind und jeweils in der Lage sind, darin eine Kassette oder Patrone (3) zu speichern, eine Transporteinrichtung (6), die in der ersten und zweiten Richtung verschiebbar ist, um wahlweise Kassetten oder Patronen (3) zwischen den Speicherbehältern (2) und zwischen den Speicherbehältern (2) und der Wiedergabe- und/oder Aufzeichnungseinrichtung (4) zu transportieren, und ein langgestrecktes, flexibles elektrisches Verbindungsteil (92) aufweist, welches sich von einer festen elektrischen Steuersignalquelle (93) zur Transporteinrichtung (6) erstreckt und eine Länge aufweist, um Verschiebungen der Transporteinrichtung (6) in der ersten Richtung zu erlauben,
**gekennzeichnet durch**
eine erste verschiebbare Rolleneinrichtung (97), um die sich das elektrische Verbindungsteil (92) erstreckt, um darin eine Bucht (92b) bilden, eine Einrichtung (103), die die erste verschiebbare Rolleneinrichtung (97) zwecks Verschiebungen in der ersten Richtung befestigt, eine zweite verschiebbare Rolleneinrichtung (100), die zur Hin- und Herbewegung in einer Bahn befestigt ist, die senkrecht zur Achse der zweiten Rolleneinrichtung (100) ist, eine erste langgestreckte flexible mechanische Verbindung (101), die an einem Ende der Transporteinrichtung (6) und an ihrem anderen Ende mit einem stationären Anker (98a) verbunden ist, wobei sich die erste mechanische Verbindung (101) rund um die zweite verschiebbare Rolleneinrichtung (100) erstreckt, um diese in dieser Bahn in Abhängigkeit von Verschiebungen der Transporteinrichtung (6) in der ersten Richtung zu verschieben, und eine zweite langgestreckte flexible mechanische Verbindung (107), die sich zwischen der ersten Rolleneinrichtung (97) in der ersten Richtung in Abhängigkeit von Verschiebungen der zweiten Rolleneinrichtung (100) in dieser Bahn verschiebt, um ein Schlackern in der Bucht (92b) des elektrischen Verbindungsteils (92) zu vermeiden.

2. Vorrichtung nach Anspruch 1, wobei eine Zugfeder (108) in die zweite mechanische Verbindung (107) eingefügt ist, um eine bestimmte Spannkraft im elektrischen Verbindungsteil (92) beizubehalten.

3. Vorrichtung nach Anspruch 1, wobei die Verschiebungsbahn der zweiten Rolleneinrichtung (100) parallel zur ersten Richtung ist und eine Bucht außerdem in der ersten mechanischen Verbindung (101) gebildet ist, die sich rund um die zweite Rolleneinrichtung (100) so erstreckt, daß bei der Verschiebung der Transporteinrichtung (6, usw.) in der ersten Richtung die erste und zweite Rolleneinrichtung (97, 100) jeweils in der ersten Richtung um eine Hälfte der Verschiebung der Transporteinrichtung (6, usw.) verschoben wird, um das Schlackern des elektrischen Verbindungsteils (92) zu vermeiden.

4. Vorrichtung nach Anspruch 3, wobei die erste Richtung horizontal ist.

5. Vorrichtung zur wahlweisen Lieferung und Reproduzierung von Kassetten oder Patronen (3), die mehrere Wiedergabe- und/oder Aufzeichnungseinrichtungen (4), mehrere Kassettenspeicherbehälter (2), die in der horizontalen und vertikalen Richtung aufgereiht sind und die jeweils in der Lage sind, darin eine Kassette oder Patrone (3) zu speichern, und eine Transporteinrichtung (6, usw.) besitzt, um selektiv Kassetten oder Patronen (3) zwischen den Speicherbehältern (2) und zwischen den Speicherbehältern (2) und den Wiedergabe- und/oder Aufzeichnungseinrichtungen (4) zu transportieren;
wobei die Transporteinrichtung (6, usw.) aufweist:
horizontal sich erstreckende, obere und untere feste Führungsschienen (12, 39), die vertikal voneinander beabstandet sind;
obere und untere Schiebeteile (13, 40), die längs der oberen bzw. unteren festen Führungsschienen (12, 39) verschiebbar sind;
eine Schiebeantriebseinrichtung (71), um die oberen und unteren Schiebeteile (13, 40) längs der festen Führungsschienen (12, 39) anzutreiben;
eine verschiebbare Führungsschieneneinrichtung (5), die sich in vertikaler Richtung zwischen den oberen und unteren Schiebeteilen (13, 40) erstreckt;
eine Wageneinrichtung (6), welche auf der verschiebbaren Führungsschieneneinrichtung (5) befestigt ist, um sich längs damit in vertikaler Richtung zu verschieben, und in der Lage ist, eine Kassette oder Patrone (3) aus und um eine Kassette oder Patrone (3) in einen ausgewählten der Speicherbehälter (2) oder der Aufzeichnungs- und/oder Wiedergabeeinrichtungen (4) zu entladen, die zu der Wageneinrichtung (6) gehören, und ein langgestrecktes flexibles elektrisches Verbindungsteil (112), welches sich vom oberen Schiebeteil (13) zur Wageneinrichtung (6) erstreckt, um elektrische Steuersignale zur Wageneinrichtung (6) zu liefern und welches eine Länge hat, die ausreichend ist, um die Verschiebung der Wageneinrichtung (6) längs der verschiebbaren Führungsschieneneinrichtung (5) aufzunehmen;
**gekennzeichnet dadurch,** daß die Transporteinrichtung (6, usw.) außerdem aufweist
eine verschiebbare Rolleneinrichtung (115), unterhalb der sich das elektrische Verbindungsteil (112) erstreckt, um darin eine Bucht zu bilden; und
eine Einrichtung (113, 118), die die verschiebbare Rolleneinrichtung (115) führt, damit sie sich längs der bewegbaren Führungsschieneneinrichtung (5) unter dem Einfluß der Schwerkraft verschiebt, so daß das Gewicht der verschiebbaren Rolleneinrichtung (115) so wirkt, daß das Schlackern des elektrischen Verbindungsteils (112) aufgenommen wird.

## Revendications

1. Appareil pour fournir de manière sélective et reproduire des cassettes ou cartouches (3) et qui comprend une pluralité de moyens de reproduction et/ou d'enregistrement (4), une pluralité de casiers de stockage de cassettes ou de cartouches (2) en rangées suivant une première et une seconde direction en relation orthogonale, et qui sont chacun capables de stocker à l'intérieur une cassette ou cartouche (3), des moyens de transport (6) mobiles dans lesdites première et seconde directions pour transporter de manière sélective des cassettes ou cartouches (3) entre lesdits casiers de stockage (2), et entre lesdits casiers de stockage (2) et lesdits moyens de reproduction et/ou d'enregistrement (4), et un élément de connexion électrique allongé et flexible (92) qui s'étend depuis une source fixe (93) de signaux de commande électriques jusqu'aux moyens de transport (6) et qui a une longueur pour permettre des mouvements desdits moyens de transport (6) dans ladite première direction, caractérisé par des premiers moyens en forme de rouleau mobile (97) autour duquel ledit élément de connexion électrique (92) s'étend pour y former une anse (92b), des moyens (103) pour monter lesdits premiers moyens en forme de rouleau mobile (97) pour des mouvements dans ladite première direction, des seconds moyens en forme de rouleau mobile (100) montés pour des mouvements de va-et-vient dans un trajet perpendiculaire à l'axe desdits seconds moyens à rouleau (100), une première connexion mécanique allongée et flexible (101) connectée à une extrémité desdits moyens de transport (6) et à son autre extrémité à un ancrage stationnaire (98a), ladite première connexion mécanique (101) s'étendant autour desdits seconds moyens à rouleau mobile (100) pour les déplacer dans ledit trajet en réponse à des mouvements desdits moyens de transport (6) dans ladite première direction, et une seconde connexion mécanique allongée et flexible (107) s'étendant entre lesdits premiers et lesdits seconds moyens à rouleau mobile (97, 100) pour déplacer lesdits premiers moyens à rouleau (97) dans ladite première direction en réponse à des mouvements desdits seconds moyens à rouleau (100) dans ledit trajet de façon à éviter un mou dans ladite anse (98b) dudit élément de connexion électrique (92).

2. Appareil selon la revendication 1, dans lequel un ressort de tension (108) est interposé dans ladite seconde connexion mécanique (107) pour maintenir une tension prédéterminée dans ledit élément de connexion électrique (92).

3. Appareil selon la revendication 1, dans lequel ledit trajet de mouvement desdits seconds moyens à rouleau (100) est parallèle à ladite première direction, et une anse est également formée dans ladite première connexion mécanique (101) en s'étendant autour desdits seconds moyens à rouleau (100) de sorte que, lors du mouvement desdits moyens de transport (6, etc.) dans ladite première direction, lesdits premier et second moyens à rouleau (97, 100) sont déplacés chacun dans ladite première direction sur la moitié dudit mouvement des moyens de transport (6, etc.) pour éviter ledit mou de l'élément de connexion électrique (92).

4. Appareil selon la revendication 3, dans lequel ladite première direction est horizontale.

5. Appareil pour fournir et reproduire sélectivement des cassettes ou des cartouches (3) et qui inclut une pluralité de moyens de reproduction et/ou d'enregistrement (4), une pluralité de casiers de stockage de cassettes (2) en rangées suivant des directions horizontale et verticale et étant chacun capable de stocker à l'intérieur une cassette ou cartouche (3), et des moyens de transport (6, etc.) pour transporter de façon sélective des cassettes ou cartouches (3) entre lesdits casiers de stockage (2) et entre lesdits casiers de stockage (2) et lesdits moyens de reproduction et/ou d'enregistrement (4) ;
lesdits moyens de transport (6, etc.) comprenant :
des rails de guidage fixes supérieur et inférieur (12, 39) qui s'étendent horizontalement et sont écartés verticalement l'un de l'autre ;
des éléments à coulisseau supérieur et inférieur (13, 40) mobiles le long desdits rails de guidage fixes supérieur et inférieur (12, 39) respectivement ;
des moyens d'entraînement de coulisseau (71) pour entraîner lesdits éléments à coulisseau supérieur et inférieur (13, 40) le long desdits rails de guidage fixes (12, 39) ;
des moyens en forme de rail de guidage mobile (5) s'étendant verticalement entre lesdits éléments à coulisseau supérieur et inférieur (13, 40) ;
des moyens formant chariot (6) montés sur ledit rail de guidage mobile (5) pour un mouvement vertical le long de celui-ci et étant capables de recevoir une cassette ou une cartouche (3) depuis un casier choisi parmi lesdits casiers de stockage (2) ou depuis lesdits moyens de reproduction et/ou d'enregistrement (4), ou bien de décharger une cassette ou cartouche (3) dans ce casier ou dans ces moyens de reproduction et/ou enregistrement avec lequel lesdits moyens formant chariot (6) sont en concordance ; et un élément de connexion électrique allongé et flexible (112) s'étendant depuis ledit coulisseau supérieur (13) jusqu'audit chariot (6) pour fournir des signaux de commande électriques audit chariot (6) et ayant une longueur suffisante pour tenir compte dudit mouvement dudit chariot (6) le long dudit rail de guidage mobile (5) ;
caractérisé en ce que lesdits moyens de transport (6, etc.) comprennent en outre :
des moyens en forme de rouleau mobile (115) sous lesquels ledit élément de connexion électrique (112) s'étend pour y former une anse ; et
des moyens (113, 118) pour guider lesdits moyens en forme de rouleau mobile (115) pour des mouvements le long dudit rail de guidage mobile (5) sous l'influence de la gravité de sorte que le poids dudit rouleau mobile (115) agir pour annuler le mou dans ledit élément de connexion électrique (112).
